# EUROPEAN PATENT SPECIFICATION

(11) **EP 2 261 568 B1**
(45) Date of publication and mention of the grant of the patent: **21.02.2018**
(21) Application number: 09007754.6
(22) Date of filing: 12.06.2009
(51) Int. Cl.: F24C 7/08, F24C 15/20

(54) **Control device for kitchen appliance**
Bedieneinrichtung für Küchengerät
Commande d'un appareil de cuisine

(43) Date of publication of application: 15.12.2010
(73) Proprietor: Electrolux Home Products Corporation N.V., 1130 Brussels (BE)
(72) Inventor: Holzgreve, Eva, 33080 Porcia (PN) (IT)
(74) Representative: Electrolux Group Patents

(56) References cited:
- EP-A1- 0 570 669
- EP-A1- 0 831 276
- EP-A1- 0 944 147
- EP-A2- 1 719 952
- DE-A1- 19 545 942
- DE-U1- 29 710 746
- DE-U1-202005 006 474
- FR-A1- 2 887 672
- GB-A- 2 435 411

## Description

The present invention refers to a kitchen appliance according to the preamble of claim 1.

Nowadays cooking hobs are known, provided with one or more heating elements, comprising for example electrical resistors or halogen lamps, adapted to generate heat and to transfer the latter to a pot or similar receptacle containing foodstuffs to be cooked.

The heating elements are usually mounted in a casing whose base is formed by an adequate thickness of insulating material having reflective properties for the infrared radiation emitted by the heating elements.

The heating elements are covered by an upper surface, on which the pots or receptacles containing the foodstuffs can be leaned, adapted for allowing the passage of the heat produced by the heating elements.

This upper surface may be produced from laminated glass or, more frequently, it is a sheet of vitroceramic or glass-ceramic material.

Cooking hobs are also known comprising, instead of the heating elements, one or more inductive coils which can generate a variable magnetic field adapted to induce, in a metallic pot or similar receptacle, electrical currents which causes the ohmic heating of such metallic pot or receptacle, so as to cook the foodstuffs therein contained.

Also in this case the inductive coils are covered by a sheet of vitroceramic material, which substantially doesn't interfere with the magnetic field produced by the inductive coils, on which the receptacles containing the foodstuffs can be leaned.

The above described known cooking hobs are provided with control devices adapted to activate/deactivate/regulate the heating elements/inductive coils.

For example EP 0 887 594 discloses a hob comprising a rectangular frame with a sloping front face, three or more hotplates, and rows of display and control devices provided at the sloping front face. In one embodiment the sloping face is constructed in one piece from the same glass-ceramic material as the frame; in another embodiment the frame and the sloping face are manufactured separately from either the same material or different materials and assembled together. The sloping face can be metallic, and the frame can be made of glass-ceramic material.

This solution has however the drawback that the display and control devices, being provided at the sloping front face of the rectangular frame, may result uncomfortable to use, in particular if the user is very close to the hob (which often happens, for example, when the user has to stir the food contained in a pot), and may oblige the user to move away from the hob in order to see the display and/or to use the control device.

EP 0 831 276 discloses a kitchen cooking assembly comprising a vitroceramic hob lowerly provided with electric heating elements and with an electronic control unit including touch-sensitive controls, arranged on the upper face of the hob, for the heating elements, and an electric built-in oven adjacent to the vitroceramic hob. The oven is provided with respective control and adjustment members which are also arranged on the vitroceramic hob and are also consisting of touch-sensitive controls.

Also this solution has however a drawback; in fact the touch-sensitive controls are arranged on the upper surface of the hob, and therefore there is the risk that they may come into contact with the foodstuff contained in the pots placed on the hob, which might dirty and/or damage such controls.

Moreover the touch-sensitive controls are very near to the electric heating elements, and therefore the user may come into contact with these heating elements while using the touch sensitive controls, with the risk of burning himself.

A known touch-sensitive control for a kitchen appliance is described, for example, in US 4 121 204 which discloses an user input/output device (particularly for controlling a range or the like) comprising a lighted, segmented bar graph type display and an array of light transmitting touch sensitive areas superimposed over the bar graph display. A suitable circuit means is responsive to the touch sensitive areas and connected for driving the segments of the bar graph such that when any one of the touch sensitive areas is touched, a corresponding display segment and all display segments to one side are energized and the remaining display elements are de-energized. In particular US 4 121 204 discloses an electric range including four conventional electric surface heating units and four corresponding input/output devices disposed upon the right hand portion of a vertical range control panel. The input/output devices, because of this positioning, may however result hardly accessible, in particular if pots of other receptacles are placed on the heating units.

It is also known using a kitchen appliance in cooperation with other appliances, such as a cooker hood; for example EP 0 578 600 discloses a system for the remote control of household appliances, to control basically induction-heated or vitroceramic devices, supplied with a transmitter and an infrared ray sensor-receiver or radio, located above or under the ceramic glass so that the controls of the heaters are placed on the front of an apparatus such as the cooker hood, or in an area included in the scope of the infra-red rays or radio waves, using a remote control.

Also this solution has however some drawbacks; in fact, if the controls of the heaters are placed on the front of an apparatus, such as the cooker hood, there are the same problems indicated above with reference to EP 0 887 594, that is the use of these controls may result uncomfortable. On the other hand, the use of a remote control increases the costs of the kitchen appliance.

Another example of a kitchen appliance cooperating with a cooker hood is illustrated in DE 195 45 942 which discloses a hob with a ceramic glass hob surface incorporated in a worktop of a peninsular unit, so that the cooking zones are accessible from either side; an extractor hood is positioned directly above the hob surface. All the operating controls and displays for the cooking hob and the extractor are combined in a single control unit directly associated with the hob surface or the extractor hood.

Also in this case, however, the control unit isn't very comfortable to use, particularly if the user is very close to the kitchen appliance.

DE 297 10 746 U1 discloses a cooking hob with a glass ceramic panel and a user interface. The user interface glass is arranged in front of the ceramic panel and includes control elements. The user interface is inclined downwardly to the front side.

EP 0 570 669 A1 discloses a cooking hob with a horizontal cooking area and lateral display and control elements. The display elements are arranged on an inner lateral surface extending upwards from the cooking area. The control elements are arranged on an outer lateral surface extending downwards from said inner lateral surface.

The aim of the present invention is therefore to obtain a kitchen device, particularly a cooking hob and/or a cooking hood, which may be operated in a comfortable and ergonomic way even by a user placed very close to the kitchen device.

Within this aim, another object of the invention is to provide the user with a feedback of his operations of the kitchen appliance.

Another object of the invention is to obtain a kitchen appliance which allows a user to operate also one or more further kitchen appliances.

It is therefore an object of the present invention to solve the above-noted problems, thereby doing away with the drawbacks of the cited prior art.

The Applicant has found that by providing on a lateral surface of a kitchen appliance a touch-sensitive control device adapted to operate one or more electrical and/or electromechanical devices provided on the same kitchen appliance and/or on one or more further kitchen appliances, it is possible to operate the same kitchen appliance and/or another kitchen appliance in a very comfortable and ergonomic way, allowing the user to easily operate the kitchen appliance even if he is placed very close to the latter.

According to the present invention said lateral surface is provided with a touch-sensitive control device adapted to operate said one or more electrical and/or electromechanical devices of the same kitchen appliance and/or of one or more further kitchen appliances, wherein the cooking hob defines a further inclined lateral surface, substantially perpendicular to the frontal surface, opposite to the lateral surface with respect to the working surface and provided with a further touch-sensitive control device adapted to operate the one or more electrical and/or electromechanical devices of the same kitchen appliance and/or of one or more further kitchen appliances, and wherein said lateral surfaces extend from the working surface ever downwards.

Opportunely the kitchen appliance comprises a connecting device adapted to allow its touch-sensitive control device to operate one or more electrical and/or electromechanical devices of one or more further kitchen appliances.

Advantageously the kitchen appliance comprises a selecting device adapted for allowing a user to select which of the one or more electrical and/or electromechanical devices of the same kitchen appliance or of a further kitchen appliance has to be operated, in a particular moment, by the touch-sensitive control device.

Advantageously the touch-sensitive control device comprises a touch-sensitive sensor and an illuminating device operated by the touch-sensitive sensor.

Opportunely the touch-sensitive sensor is associated to the lateral surface in such a way that the touch-sensitive sensor is able to detect the sliding of a body in proximity of, or in contact with, the lateral surface.

Preferably the illuminating device is adapted to illuminate the lateral surface in such a way that a region of the lateral surface, if previously not illuminated by the illuminating device, is illuminated during and/or after the sliding on it of a body in a first sliding direction, while a region of the lateral surface, if previously illuminated by the illuminating device, is darkened during and/or after the sliding of a body on it in a second sliding direction.

The kitchen appliance comprises a further lateral surface, substantially perpendicular to the frontal surface, provided with a further touch-sensitive control device adapted to operate the one or more electrical and/or electromechanical devices of the same kitchen appliance and/or of one or more further kitchen appliances.

The kitchen appliance comprises a cooking hob, defining the lateral surface and comprising a working surface provided with one or more heating devices, the lateral surface being inclined with respect to the working surface. In this case the further kitchen appliance comprises one or more cooking hoods and/or one or more further cooking hobs.

In another embodiment thereof, the kitchen appliance comprises a cooking hood, defining the lateral surface and comprising a working surface provided with suction devices, the lateral surface being substantially perpendicular or inclined with respect to the working surface. In this case the further kitchen appliance comprises one or more cooking hobs and/or one or more further cooking hoods.

Features and advantages of the present invention will anyway be more readily understood from the description that is given below by way of non-limiting example with reference to the accompanying drawings, in which:
- **Figure 1** is a schematic prospective view of two kitchen devices according to the invention, particularly a cooking hob and a cooking hood.
- **Figure 2** is a schematic prospective view of the two kitchen devices of Figure 1 in a different operating condition.

The present invention regards a kitchen appliance, particularly a kitchen appliance comprising a cooking hob 1 and/or a cooking hood 2.

With reference to the enclosed Figures, the cooking hob 1 comprises a box-shaped casing 6a, preferably substantially parallelepiped-shaped, adapted to be positioned on the top surface 8 of a kitchen furniture, for example a kitchen base.

The box-shaped casing 6a comprises a frontal surface 14a adapted, once the cooking hob 1 is installed on the top surface 8, to be faced by a user, not illustrated; in other words a user, in order to use the cooking hob 1, has to stay substantially in front of the frontal surface 14a.

The box-shaped casing 6a also comprises a lateral surface 7a which is substantially perpendicular to the frontal surface 14a.

The box-shaped casing 6a is closed upwards by a working surface 3a, advantageously substantially horizontal, preferably, but not necessarily, made of laminated glass, or of a vitroceramic or glass-ceramic material.

Opportunely the lateral surface 7a is inclined with respect to the working surface 3a.

In the embodiment illustrated in the enclosed Figures, the working surface 3a and the lateral surface 7a are manufactured separately from either the same material or different materials and are subsequently assembled together; in a further embodiment, not illustrated, the working surface 3a and the lateral wall 7a are obtained in single-piece construction, for example by a single sheet of glass-ceramic material, opportunely shaped in order to define both the working surface 3a and the lateral wall 7a.

Advantageously the cooking hob 1 comprises one or more electrical and/or electromechanical devices; advantageously these electrical and/or electromechanical devices comprise one or more heating devices 4 (preferably, but not necessarily, four or five) adapted to heat a pot 5 (or similar receptacle) leaning on the working surface 3a, so as to cook the foodstuff contained in such a pot 5.

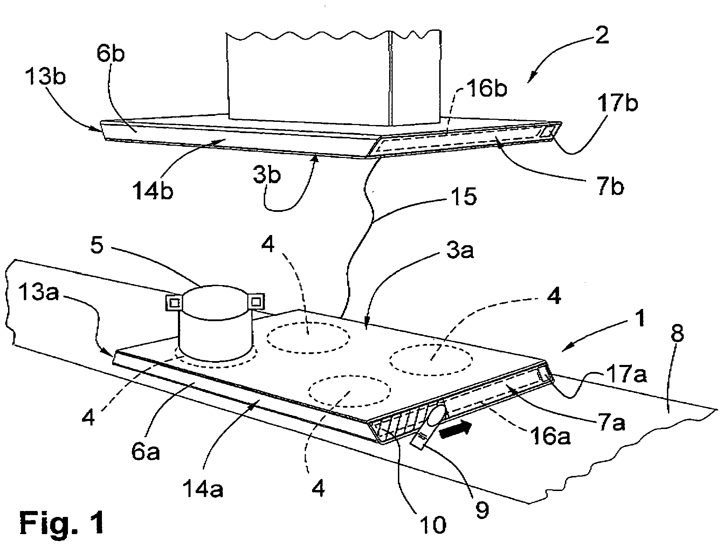

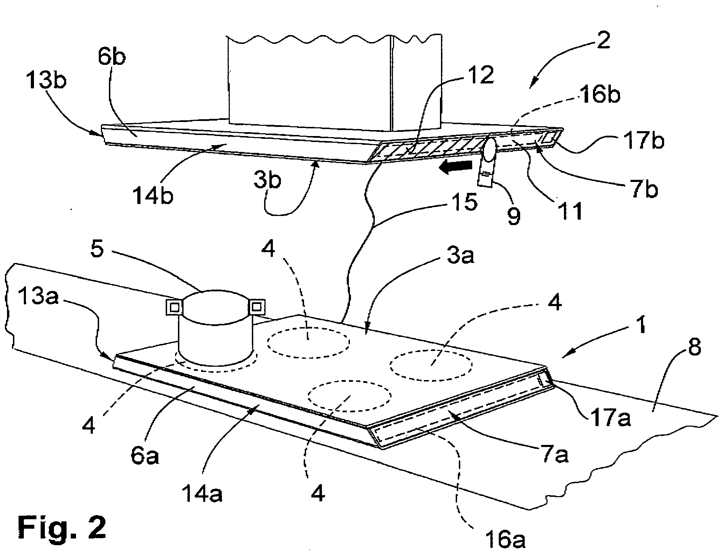

In the embodiment illustrated in the enclosed Figures, the cooking hob 1 advantageously comprises four heating devices 4 positioned inside the box-shaped casing 6a, below the working surface 3a; in Figures 1 and 2 the heating devices 4 are schematically represented by dotted lines since they are covered by the working surface 3a, and therefore they are not visible from the external.

Advantageously, the one or more heating devices 4 could comprise, for example, one or more electrical resistors or halogen lamps positioned below the working surface 3a and adapted to generate heat and to transfer the latter to an overlaying pot 5 (or similar receptacle) leaning on the working surface 3a; opportunely in this case the working surface 3a is adapted to allow the passage of the heat produced by the heating devices 4.

In another embodiment the one or more heating devices 4 advantageously comprise one or more inductive coils positioned below the working surface 3a and adapted to generate a variable magnetic field which induces, in a metallic pot 5 (or similar metallic receptacle) placed over one of such inductive coils, electrical currents which causes the ohmic heating of such metallic pot 5, so as to cook the foodstuffs therein contained; in this case the working surface 3a is made of a material (i.e. a glass-ceramic material) adapted not to interfere with the magnetic field produced by the inductive coils.

In a further embodiment, not illustrated, the one or more heating devices comprise one or more gas burners positioned in suitable seats obtained in the working surface 3a and provided with suitable electrical valves for the delivery of the gas.

In another embodiment, not illustrated, the one or more electrical and/or electromechanical devices may also comprise one or more lighting device, for example one or more LEDs, not illustrated, associated to the working surface 3a and/or to the box shaped casing 6a, and adapted to illuminate the cooking hob 1 and/or the surrounding ambient.

In a further embodiment, also not illustrated, the one or more electrical and/or electromechanical devices advantageously comprise one or more displays, not illustrated, provided on the working surface 3a and/or on the box-shaped casing 6a, and adapted to communicate to the user one or more data, for example the time elapsed from the beginning of the cooking procedure.

Advantageously the one or more electrical and/or electromechanical devices may be connected to the electrical means of the building in which the cooking hob 1 is placed by suitable electrical connectors, comprising for example suitable electric cables, not illustrated, exiting from the box shaped casing 6a.

The cooking hood 2 comprises a box-shaped casing 6b, closed downward by a working surface 3b and provided with a frontal surface 14b adapted, once installed, for facing a user, not illustrated; in other words a user, in order to use the cooking hood 2, has to stay substantially in front of the frontal surface 14b.

The box-shaped casing 6b also comprises a lateral surface 7b which is substantially perpendicular to the frontal surface 14b.

Opportunely, the working surface 3b may be substantially horizontal, as in the embodiment illustrated in the enclosed Figures, or, in another embodiment, not illustrated, it may also be inclined.

The cooking hood 2 comprises one or more electrical and/or electromechanical devices; advantageously the one or more electrical and/or electromechanical devices comprises one or more suction devices, not illustrated, comprising, for example, one or more fans adapted to aspire gases and fumes through the working surface 3b and to filter and/or to evacuate such gases and fumes via suitable filtering/evacuating means, not illustrated.

In another embodiment, not illustrated, the one or more electrical and/or electromechanical devices may also comprise one or more lighting device, for example one or more LEDs, not illustrated, associated to the working surface 3b and/or to the box-shaped casing 6b, and adapted to illuminate the cooking hood 2 and/or the surrounding ambient.

In a further embodiment, also not illustrated, the one or more electrical and/or electromechanical devices advantageously comprise one or more displays, not illustrated, provided on the working surface 3b and/or on the box-shaped casing 6b, and adapted to communicate to the user one or more data, for example the fan speed, etc.

Advantageously, in the kitchen appliance according to the invention the lateral surface 7a, 7b is provided with a touch-sensitive control device, which will be described in the following, adapted to operate (i.e. to control, to drive) the one or more electrical and/or electromechanical devices of the same kitchen appliance and/or of one or more further kitchen appliances.

Opportunely, two or more kitchen appliances according to the invention may be reciprocally connected by a suitable connecting device adapted to allow the operating of the one or more electrical and/or electromechanical devices of one of these two or more kitchen appliances by using the touch-sensitive control device present at/on another cooking appliance.

In the embodiment illustrated in the enclosed Figures, the connecting devices comprises advantageously one or more electric wires or cables 15, connecting the cooking hob 1 to the cooking hood 2; in a further embodiment, not illustrated, the connecting device may comprise a wireless transmission system, for example a radio wave transmission system, an infrared transmission system, a so-called "bluetooth" transmission system, etc.

In the embodiment illustrated in the enclosed Figures, the cooking hob 1 comprises a lateral surface 7a provided with a touch-sensitive control device adapted to operate (i.e. activate, deactivate, regulate) the one or more heating devices 4 associated to this cooking hob 1. In this embodiment the touch-sensitive control device associated to the lateral surface 7a of the cooking hob 1 is connected by a connecting device (e.g. electric wires or cables 15, or a wireless transmission system, not illustrated), to the cooking hood 2, in order to be able to operate (i.e. activate, deactivate, regulate) also the one or more suction devices of the cooking hood 2 (for example the fans contained in the box-shaped casing 6b). In this case, by the touch-sensitive control device associated to the cooking hob 1, it is therefore possible to activate, deactivate, regulate also the cooking hood 2.

In the embodiment illustrated in the enclosed Figures also the cooking hood 2 comprises a lateral surface 7b provided with a touch-sensitive control device adapted to operate (i.e. activate, deactivate, regulate) the one or more suction devices associated to this cooking hood 2; also in this case the touch-sensitive control device associated to the lateral surface 7b of the cooking hood 2 is connected by a connecting device (e.g. electric wires or cables 15, or a wireless transmission system, not illustrated), to the cooking hob 1, in order to be able to operate the one or more heating devices 4 of the cooking hob 1. From the cooking hood 2 it is therefore possible to operate also the cooking hob 1.

According to the invention, therefore, there may be two or more kitchen appliances, all of them reciprocally connected by one more connecting devices (e.g. electric wires or cables, or a wireless transmission system) so that the one or more electrical and/or electromechanical devices of one of these two or more kitchen appliances may be operated (i.e. controlled, driven) by one or more touch-sensitive control devices provided on one or more of these two or more kitchen appliances.

Obviously, a touch-sensitive control device may be provided only on one among two or more kitchen appliances connected one another by one or more connecting devices (e.g. electric wires or cables, or a wireless transmission system); in this case a kitchen appliance which is not provided with the touch-sensitive control device may be operated by using the touch-sensitive control device provided on another kitchen appliance.

For example, three kitchen appliances according to the invention (e.g. two cooking hobs and a cooking hood) may be connected by one or more connecting devices (e.g. electric wires or cables, or a wireless transmission system), and their one or more electrical and/or electromechanical devices (e.g. the heating devices of the cooking hobs and the fans of the cooking hood) may be operated by one or more touch-sensitive control devices present on one or more of these kitchen appliances.

For example, in the case of two cooking hobs and a cooking hood, the touch-sensitive control device could be provided on only one of the cooking hobs, and it could be adapted to operate the one or more electrical and/or electromechanical devices of both the two cooking hobs and also of the cooking hood. In another embodiment thereof, two touch-sensitive control devices are provided both on the cooking hood and on one of the cooking hobs, and both these touch-sensitive control devices are adapted to operate the one or more electrical and/or electromechanical devices of all the three kitchen appliances.

Clearly only one kitchen appliance may be present (a cooking hob 1) provided with a touch-sensitive control device adapted to operate the one or more electrical and/or electromechanical devices of such kitchen appliance.

Advantageously, the touch-sensitive control device provided on the lateral surface 7a, 7b comprises a touch-sensitive sensor 16a, 16b, which will be better described in the following, and an illuminating device, not illustrated, operated by the touch-sensitive sensor.

Advantageously the kitchen appliance according to the invention comprises an electronic controller, for example an electronic board or an electronic microcontroller, adapted to operatively connect the touch-sensitive sensor, the illuminating device, the one or more electrical and/or electromechanical devices, and (if present) the connecting device adapted to connect the touch-sensitive control device of a kitchen appliance with one or more further kitchen appliances.

The electronic controller may be configured and/or programmed in order to operate (i.e. control, drive) in a particular way the one or more electrical and/or electromechanical devices of a kitchen appliance, depending on a particular action detected by the touch-sensitive sensor 16a, 16b of the same kitchen appliance, or of a further kitchen appliance connected to the latter by a connecting device (e.g. electric wires or cables, or a wireless transmission system).

For example, with reference to the enclosed Figures, an electronic controller, not illustrated, associated to the cooking hob 1, may be configured and/or programmed in order to activate/deactivate one of the heating devices 4 of the cooking hob 1 depending on a particular action detected by the touch-sensitive sensor 16a, 16b of the cooking hob 1 or of the cooking hood 2.

A further electronic controller, not illustrated, associated to the cooking hood 2, may be configured and/or programmed in order to activate/deactivate the suction fan of a cooking hob 1 depending on a particular action detected by the touch-sensitive sensor 16a, 16b of the cooking hood 2 or of the cooking hob 1.

Preferably the touch-sensitive sensor 16a, 16b is adapted to detect the movement of a body (for example a finger, a hand, etc.) placed close to or in contact with such touch-sensitive sensor 16a, 16b, in at least two different directions, for example two linear movements of a body in two opposite directions.

For example the touch-sensitive sensor 16a, 16b could be a capacitive sensor, or an inductive sensor, or an optical sensor, or a piezoelectric sensor, etc.

Advantageously the touch-sensitive sensor 16a, 16b is associated to the lateral surface 7a, 7b in such a way that it can detect the sliding of a body (i.e. a hand or one or more fingers of a user) in proximity of, or in contact with, the lateral surface 7a, 7b; opportunely the touch-sensitive sensor 16a, 16b may be fixed behind or in front of the lateral surface 7a, 7b.

In the embodiment illustrated in the enclosed Figures, a touch-sensitive sensor 16a, 16b is fixed behind each of the lateral surfaces 7a, 7b and isn't visible from the external, so it has been schematically represented by dotted lines.

Preferably, but not necessarily, the illuminating device comprised in the touch-sensitive control device may comprise one or more light emitting diodes (LEDs), and/or one or more light guides, for example optical fibres; clearly the illuminating device may comprise any other electrical or electronic light source (i.e. halogen lamps, light bulbs, etc.).

Opportunely the illuminating device is adapted to illuminate the lateral surface 7a, 7b in such a way that a region of the lateral surface 7a, 7b, if previously dark (i.e. not illuminated by the illuminating device), is illuminated during and/or after the sliding on/over it of a body in a first sliding direction, while a region of the lateral surface 7a, 7b, if previously illuminated by the illuminating device, is darkened during and/or after the sliding of a body on/over it in a second sliding direction.

This allows user to have a visual feedback (i.e. the illumination or darkening of a region of the lateral surface 7a, 7b) of the operation of the one or more electrical and/or electromechanical devices.

For example, with reference to Figure 1, by sliding a finger 9 on a first region 10 (previously not illuminated by the illuminating device) of the lateral surface 7a of the cooking hob 1, the touch-sensitive sensor 16a provided on the lateral surface 7a detects the sliding of the finger 9 in a prefixed sliding direction, and commands the illuminating device in order to illuminate the first region 10 (in the enclosed Figures, the illumination of a region of the lateral surface 7a, 7b has been represented by a series of inclined lines).

In the same time the touch-sensitive sensor 16a operates (i.e. activates/deactivates/regulates) one or more of the heating devices 4 of the cooking hob 1, and/or of the suction devices of the cooking hood 2, depending on the particular programming of the electronic controllers of the cooking hob 1 and of the cooking hood 2.

With reference to Figure 2, by sliding a finger 9 on a second region 11, previously lightened, of the lateral surface 7b of the cooking hood 2, the touch-sensitive sensor 16b provided on the lateral surface 7b detects the sliding of the finger 9 in a certain sliding direction, and commands the illuminating device in order to darken the second region 11 (while the rest, numbered 12 in Figure 2, of the lateral surface 7b, previously illuminated by the illuminating device, remains illuminated).

At the same time the touch-sensitive sensor 16b operates (i.e. activates/deactivates/regulates) one or more of the suction devices of the cooking hood 2, and/or of the heating devices 4 of the cooking hob 1, depending on the particular programming of the electronic controllers of the cooking hob 1 and of the cooking hood 2.

Clearly, with reference to both Figures 1 and 2, if other electrical and/or electromechanical devices, not illustrated, are provided (e.g. other lighting devices, displays, etc.), the electronic controllers of the cooking hob 1 and/or of the cooking hood 2 may be configured/programmed in order to operate also these other electrical and/or electromechanical devices, depending on the particular sliding of the finger 9 on the lateral surface 7a or 7b detected by the touch-sensitive sensor 16a or 16b.

The kitchen appliance is advantageously provided with a selecting device, which will be better described in the following, adapted for allowing the user to select which of the one or more electrical and/or electromechanical devices of the same kitchen appliance or of a further kitchen appliance has to be operated, in a particular moment, by the touch-sensitive control device.

Advantageously this selecting device is connected to the electronic controller of the kitchen appliance, so that, by a suitable programming of the latter, it is possible to associate a particular action (for example a pressure, a rotation, a contact, etc.) applied to this selecting device to the selection of one electrical and/or electromechanical device to be operated (i.e. controlled, driven).

Advantageously the selecting device can be placed on the lateral surfaces 7a, 7b of the kitchen appliance, and/or on the working surface 3a, 3b, and/or on the box-shaped casing 6a, 6b and/or on any accessible part of the kitchen appliance; opportunely the selecting device may be provided also externally to the kitchen appliance (e.g. on the surface 8 of a kitchen furniture), and may be operatively connected to the kitchen appliance for example by wires or cables, not illustrated, or by a wireless transmission system, also not illustrated.

In the embodiment illustrated in the enclosed Figures, the selecting device comprises one or more buttons 17a, 17b (touch-sensitive or not), placed respectively on the lateral surfaces 7a, 7b, next to the touch-sensitive sensors 16a, 16b, and adapted for selecting, by their pressure, which among the one or more electrical and/or electromechanical devices of the same kitchen appliance or of a further kitchen appliance has to be operated, in a particular moment, by the touch-sensitive control device.

In a further embodiment, not illustrated, the selecting device comprises one or more knobs, placed on the lateral surfaces 7a, 7b, and/or on the working surface 3a, 3b or/and on the box-shaped casing 6a, 6b, and adapted for selecting, by their rotation, which among the one or more electrical and/or electromechanical devices of the same kitchen appliance or of a further kitchen appliance has to be operated, in a particular moment, by the touch-sensitive control device.

In a further embodiment thereof, not illustrated, the selecting device comprises the same touch-sensitive sensor provided on the lateral surface 7a, 7b of the kitchen appliance; in this case the electronic controller of the kitchen appliance could be programmed in such a way that a particular action detected by the touch-sensitive sensor, for example two fast touches (i.e. with the second touch made a prefixed very short time interval after the first touch) on a particular region of the lateral surface 7a, 7b, or a rotation of a body on/over a particular region of the lateral surface 7a, 7b, etc., causes the touch-sensitive control device, from then on, to operate one particular among the one or more electrical and/or electromechanical devices of the same kitchen appliance or of a further kitchen appliance.

For example, a particular number may be assigned to each heating device 4 of a cooking hob 1, and the electronic controller of the cooking hob 1 may be programmed in such a way that after a user applies to a particular region of the lateral surface 7a a particular number of fast (i.e. made one a very few time after the other) touches, from then on, the heating device 4 operated by the touch-sensitive control device is the one whose number corresponds to the number of fast touches detected by the touch-sensitive sensor.

A similar solution may be used, if more than one cooking hobs 1 and/or cooking hoods 2 are present, in order to select which among the one or more cooking hobs 1 and/or the one or more cooking hoods 2 has to be operated by the touch-sensitive control device of one of these one or more cooking hobs 1 and/or cooking hoods 2.

However, this is only an example of how the selection of the one or more heating devices 4 or of the one or more suction devices can be made; the electronic controller may be programmed in such a way that also other specific actions or movements detected by the touch-sensitive sensor 16a, 16b correspond to the selection of one or more electrical and/or electromechanical devices of the same kitchen appliance or of a further kitchen appliance.

Advantageously the kitchen appliance according to the invention is provided of a further lateral surface 13a, 13b, substantially perpendicular to the frontal surface 14a, 14b, opposite to the lateral surface 7a, 7b with respect to the working surface 3a, 3b, and provided with a touch-sensitive control device analogous to the one described with reference to the lateral surface 7a, 7b, adapted to operate the one or more electrical and/or electromechanical devices of the same kitchen appliance and/or of one or more further kitchen appliances.

For example the lateral surface 7a of the cooking hob 1 (on the right in the enclosed Figures) may be provided with a first touch-sensitive control device for controlling the operations of the cooking hob 1, and the further lateral surface 13a of the cooking hob 1 (on the left in the enclosed Figures) may be provided with a second touch-sensitive control device for controlling the operations of the cooking hood 2.

Also the further lateral surface 13a, 13b of a kitchen appliance according to the invention is inclined with respect to the working surface 3a, 3b of such a kitchen appliance.

The embodiment in which the lateral surface 7a (and, if present, also the further lateral surface 13a) of the cooking hob 1 is inclined (e.g. of an angle of 45°) with respect to the working surface 3a, is particularly advantageous, because such inclination makes more ergonomic the access to the touch-sensitive control device and the visualization of the latter. Having the lateral surface 7b and the further lateral surface 13b of the cooking hood 2 inclined (e.g. of an angle of 45°) with respect to the working surface 3b, is particularly advantageous, because such inclination makes more ergonomic the access to the touch-sensitive control device and the visualization of the latter.

It is seen therefore how the invention achieves the proposed aim and objects, there being provided a kitchen device which, thanks to the particular position of the touch-sensitive control device, allows to user to operate the electrical or electromechanical devices (e.g. the heating devices in the case of a cooking hob, the suction fan in the case of a cooking hood, etc.) of such a kitchen appliance in a very comfortable and ergonomic way.

In addition, thanks to the illuminating device comprised in the touch-sensitive control device, the user may have a visual feedback of his operations of the kitchen appliance during the usage of the latter.

Moreover, the kitchen appliance according to the invention allows a user to operate more than one kitchen appliances from a single kitchen appliance.

## Claims

1. Kitchen appliance comprising:
- one or more electrical and/or electromechanical devices;
- a frontal surface (14a) adapted, once the kitchen appliance is installed, to be faced by a user;
- a lateral surface (7a) substantially perpendicular to said frontal surface (14a); and
- a cooking hob (1) defining said lateral surface (7a) and comprising a working surface (3a) provided with one or more heating devices (4), wherein
- said lateral surface (7a) is inclined with respect to the working surface (3a) and provided with a control device adapted to operate said one or more electrical and/or electromechanical devices of the same kitchen appliance,
**characterized in that** said lateral surface (7a) is provided with a touch-sensitive control device adapted to operate said one or more electrical and/or electromechanical devices of the same kitchen appliance and/or of one or more further kitchen appliances, wherein the cooking hob (1) defines a further inclined lateral surface (13a), substantially perpendicular to the frontal surface (14a), opposite to the lateral surface (7a) with respect to the working surface (3a) and provided with a further touch-sensitive control device adapted to operate the one or more electrical and/or electromechanical devices of the same kitchen appliance and/or of one or more further kitchen appliances, and wherein said lateral surfaces (7a, 13a) extend from the working surface (3a) ever downwards.

2. Kitchen appliance, according to claim 1, **characterized in that** said lateral surface (7a) is arranged in such a way that, once the kitchen appliance is installed, said lateral surface (7a) is inclined with respect to a horizontal plane, so as to facilitate the use of said touch-sensitive control.

3. Kitchen appliance, according to claim 1 or 2, **characterized in that** it comprises a connecting device adapted to allow its touch-sensitive control device to operate one or more electrical and/or electromechanical devices of one or more further kitchen appliances.

4. Kitchen appliance, according to one or more of the previous claims, **characterized in that** it comprises a selecting device (17a) adapted for allowing a user to select which of the one or more electrical and/or electromechanical devices of the same kitchen appliance or of a further kitchen appliance has to be operated, in a particular moment, by said touch-sensitive control device.

5. Kitchen appliance, according to one or more of the previous claims, **characterized in that** said touch-sensitive control device comprises a touch-sensitive sensor (16a) and an illuminating device operated by said touch-sensitive sensor (16a).

6. Kitchen appliance, according to claim 5, **characterized in that** said touch-sensitive sensor is associated to said lateral surface (7a) in such a way that said touch-sensitive sensor is able to detect the sliding of a body in proximity of, or in contact with, said lateral surface (7a).

7. Kitchen appliance, according to claim 5 or 6, **characterized in that** said illuminating device is adapted to illuminate said lateral surface (7a) in such a way that a region of said lateral surface (7a), if previously not illuminated by said illuminating device, is illuminated during and/or after the sliding on it of a body in a first sliding direction, while a region of said lateral surface (7a), if previously illuminated by the illuminating device, is darkened during and/or after the sliding of a body on it in a second sliding direction.

8. Kitchen appliance, according to one or more of the claims 1 to 7, **characterized in that** said further kitchen appliance comprises one or more cooking hoods (2) and/or one or more further cooking hobs (1).

9. Kitchen appliance, according to one or more of claims 1 to 8, **characterized in that** it comprises a cooking hood (2) defining a lateral surface (7b) and comprising a working surface (3b) provided with suction devices, said lateral surface (7b) being substantially perpendicular or inclined with respect to said working surface (3b).

10. Kitchen appliance, according to claim 9 **characterized in that** said further kitchen appliance comprises one or more cooking hobs (1) and/or one or more further cooking hoods (2).

## Patentansprüche

1. Küchengerät, das aufweist:
- eine oder mehrere elektrische und/oder elektromechanische Vorrichtungen;
- eine Frontfläche (14a), die dazu ausgebildet ist, vor einem Benutzer angeordnet zu sein, wenn das Küchengerät einmal eingebaut ist;
- eine Seitenfläche (7a), die im Wesentlichen im rechten Winkel zu der Frontfläche (14a) angeordnet ist; und
- ein Kochfeld (1), das die Seitenfläche (7a) definiert und eine mit einer oder mehreren Heizvorrichtungen (4) vorgesehene Arbeitsfläche (3a) aufweist, wobei
- die Seitenfläche (7a) bezüglich der Arbeitsfläche (3a) geneigt ist und mit einer Bedieneinrichtung vorgesehen ist, die zum Bedienen der einen oder mehreren elektrischen und/oder elektromechanischen Vorrichtungen desselben Küchengeräts ausgebildet ist,
**dadurch gekennzeichnet, dass** die Seitenfläche (7a) mit einer berührungsempfindlichen Bedieneinrichtung vorgesehen ist, die zum Bedienen der einen oder mehreren elektrischen und/oder elektromechanischen Vorrichtungen desselben Küchengeräts und/oder eines oder mehrerer weiterer Küchengeräte ausgebildet ist, wobei das Kochfeld (1) der Seitenfläche (7a) gegenüber eine bezüglich der Arbeitsfläche (3a) weitere geneigte Seitenfläche (13a) definiert, die im Wesentlichen im rechten Winkel zu der Frontfläche (14a) angeordnet ist und mit einer weiteren berührungsempfindlichen Bedieneinrichtung vorgesehen ist, die zum Bedienen der einen oder mehreren elektrischen und/oder elektromechanischen Vorrichtungen desselben Küchengeräts und/oder eines oder mehrerer weiterer Küchengeräte ausgebildet ist, und wobei sich die Seitenflächen (7a, 13a) von der Arbeitsfläche (3a) stetig nach unten erstrecken.

2. Küchengerät nach Anspruch 1, **dadurch gekennzeichnet, dass** die Seitenfläche (7a) derart angeordnet ist, dass, wenn das Küchengerät einmal eingebaut ist, die Seitenfläche (7a) bezüglich einer horizontalen Ebene geneigt ist, um die Nutzung der berührungsempfindlichen Steuerung zu erleichtern.

3. Küchengerät nach Anspruch 1 oder 2, **dadurch gekennzeichnet, dass** es eine Verbindungseinrichtung aufweist, die dazu ausgebildet ist, es ihrer berührungsempfindlichen Bedieneinrichtung zu ermöglichen, eine oder mehrere elektrische und/oder elektromechanische Vorrichtungen eines oder mehrerer weiterer Küchengeräte zu betreiben.

4. Küchengerät nach einem oder mehreren der vorhergehenden Ansprüche, **dadurch gekennzeichnet, dass** es eine Auswahlvorrichtung (17a) aufweist, die es einem Benutzer gestattet, auszuwählen, welche der einen oder mehreren elektrischen und/oder elektromechanischen Vorrichtungen desselben Küchengeräts oder eines weiteren Küchengeräts zu einem gegebenen Moment durch die berührungsempfindliche Bedieneinrichtung zu bedienen ist.

5. Küchengerät nach einem oder mehreren der vorhergehenden Ansprüche, **dadurch gekennzeichnet, dass** die berührungsempfindliche Bedieneinrichtung einen berührungsempfindlichen Sensor (16a) und eine Beleuchtungsvorrichtung, die durch den berührungsempfindlichen Sensor (16a) betrieben wird, aufweist.

6. Küchengerät nach Anspruch 5, **dadurch gekennzeichnet, dass** der berührungsempfindliche Sensor mit der Seitenfläche (7a) derart verbunden ist, dass der berührungsempfindliche Sensor in der Lage ist, das Gleiten eines Körpers in der Nähe oder in Kontakt mit der Seitenfläche (7a) zu erkennen.

7. Küchengerät nach Anspruch 5 oder 6, **dadurch gekennzeichnet, dass** die Beleuchtungsvorrichtung dazu ausgebildet ist, die Seitenfläche (7a) derart zu beleuchten, dass ein Bereich der Seitenfläche (7a), falls zuvor nicht durch die Beleuchtungsvorrichtung beleuchtet, während des Gleitens und/oder nach dem Gleiten eines Körpers darauf in einer ersten Gleitrichtung beleuchtet wird, während ein Bereich der Seitenfläche (7a), falls zuvor durch die Beleuchtungsvorrichtung beleuchtet, während des Gleitens und/oder nach dem Gleiten eines Körpers darauf in einer zweiten Gleitrichtung verdunkelt wird.

8. Küchengerät nach einem oder mehreren der Ansprüche 1 bis 7, **dadurch gekennzeichnet, dass** das weitere Küchengerät eine oder mehrere Dunstabzugshauben (2) und/oder ein oder mehrere weitere Kochfelder (1) aufweist.

9. Küchengerät nach einem oder mehreren der Ansprüche 1 bis 8, **dadurch gekennzeichnet, dass** es eine Dunstabzugshaube (2) aufweist, die eine Seitenfläche (7b) definiert und eine mit Saugvorrichtungen vorgesehene Arbeitsfläche (3b) aufweist, wobei die Seitenfläche (7b) im Wesentlichen im rechten Winkel zu der Arbeitsfläche (3b) angeordnet oder bezüglich der Arbeitsfläche (3b) geneigt ist.

10. Küchengerät nach Anspruch 9, **dadurch gekennzeichnet, dass** das weitere Küchengerät ein oder mehrere Kochfelder (1) und/oder ein oder mehrere weitere Dunstabzugshauben (2) aufweist.

## Revendications

1. Appareil de cuisine comprenant .
- un ou plusieurs dispositifs électriques et/ou électromécaniques ;
- une surface frontale (14a) adaptée, une fois que l'appareil de cuisine est installé, pour être face à un utilisateur ;
- une surface latérale (7a) sensiblement perpendiculaire à ladite surface frontale (14a) ; et
- une plaque de cuisson (1) définissant ladite surface latérale (7a) et comprenant une surface de travail (3a) pourvue d'un ou plusieurs dispositifs de chauffage (4), dans lequel
- ladite surface latérale (7a) est inclinée par rapport à la surface de travail (3a) et pourvue d'un dispositif de commande adapté pour faire fonctionner ledit ou lesdits dispositifs électriques et/ou électromécaniques du même appareil de cuisine,
**caractérisé en ce que** ladite surface latérale (7a) est pourvue d'un dispositif de commande tactile adapté pour faire fonctionner ledit ou lesdits dispositifs électriques et/ou électromécaniques du même appareil de cuisine et/ou d'un ou plusieurs autres appareils de cuisine, la plaque de cuisson (1) définissant une autre surface latérale inclinée (13a), sensiblement perpendiculaire à la surface frontale (14a), à l'opposé de la surface latérale (7a) par rapport à la surface de travail (3a) et pourvue d'un autre dispositif de commande tactile adapté pour faire fonctionner le ou les dispositifs électriques et/ou électromécaniques du même appareil de cuisine et/ou d'un ou plusieurs autres appareils de cuisine, et lesdites surfaces latérales (7a, 13a) s'étendant depuis la surface de travail (3a) toujours vers le bas.

2. Appareil de cuisine, selon la revendication 1, **caractérisé en ce que** ladite surface latérale (7a) est agencée de telle sorte que, une fois que l'appareil de cuisine est installé, ladite surface latérale (7a) est inclinée par rapport à un plan horizontal, de manière à faciliter l'utilisation de ladite commande tactile.

3. Appareil de cuisine, selon la revendication 1 ou 2, **caractérisé en ce qu'**il comprend un dispositif de connexion adapté pour permettre à son dispositif de commande tactile de faire fonctionner un ou plusieurs dispositifs électriques et/ou électromécaniques d'un ou plusieurs autres appareils de cuisine.

4. Appareil de cuisine, selon une ou plusieurs des revendications précédentes, **caractérisé en ce qu'**il comprend un dispositif de sélection (17a) adapté pour permettre à un utilisateur de sélectionner celui du ou des dispositifs électriques et/ou électromécaniques du même appareil de cuisine ou d'un autre appareil de cuisine que doit faire fonctionner, à un moment particulier, ledit dispositif de commande tactile.

5. Appareil de cuisine, selon une ou plusieurs des revendications précédentes, **caractérisé en ce que** ledit dispositif de commande tactile comprend un capteur tactile (16a) et un dispositif d'éclairage que fait fonctionner ledit capteur tactile (16a).

6. Appareil de cuisine, selon la revendication 5, **caractérisé en ce que** ledit capteur tactile est associé à ladite surface latérale (7a) de telle sorte que ledit capteur tactile est susceptible de détecter le glissement d'un corps à proximité de, ou en contact avec, ladite surface latérale (7a).

7. Appareil de cuisine, selon la revendication 5 ou 6, **caractérisé en ce que** ledit dispositif d'éclairage est adapté pour éclairer ladite surface latérale (7a) de telle sorte qu'une région de ladite surface latérale (7a), si elle n'était pas auparavant éclairée par ledit dispositif d'éclairage, est éclairée pendant et/ou après le glissement sur celle-ci d'un corps dans une première direction de glissement, tandis qu'une région de ladite surface latérale (7a), si elle était auparavant éclairée par le dispositif d'éclairage, est assombrie pendant et/ou après le glissement d'un corps sur celle-ci dans une deuxième direction de glissement.

8. Appareil de cuisine, selon une ou plusieurs des revendications 1 à 7, **caractérisé en ce que** ledit autre appareil de cuisine comprend une ou plusieurs hottes de cuisson (2) et/ou une ou plusieurs autres plaques de cuisson (1).

9. Appareil de cuisine, selon une ou plusieurs des revendications 1 à 8, **caractérisé en ce qu'**il comprend une hotte de cuisson (2) définissant une surface latérale (7b) et comprenant une surface de travail (3b) pourvue de dispositifs d'aspiration, ladite surface latérale (7b) étant sensiblement perpendiculaire ou inclinée par rapport à ladite surface de travail (3b).

10. Appareil de cuisine, selon la revendication 9, **caractérisé en ce que** ledit autre appareil de cuisine comprend une ou plusieurs plaques de cuisson (1) et/ou une ou plusieurs autres hottes de cuisson (2).
